# EUROPÄISCHE PATENTANMELDUNG

(11) **EP 1 741 942 A2**
(43) Veröffentlichungstag der Anmeldung: **10.01.2007**
(21) Anmeldenummer: 06013684.3
(22) Anmeldetag: 01.07.2006
(51) Int. Cl.: F16C 19/49, F16C 35/06, F16H 57/02

(54) **Lagerung einer Welle eines Kegelrades**

(30) Priorität: 07.07.2005 DE 102005031762
(71) Anmelder: AB SKF, S-415 03 Göteborg (SE)
(72) Erfinder: Wellmann, Ingo, 97464 Niederwerrn (DE); Baumann, Jens, 97520 Röthlein (DE)
(74) Vertreter: Kohl, Thomas

(57) **Zusammenfassung**

Bei einer Lagerung einer Welle eines Kegelrades mit wenigstens einem ersten, dem Kegelrad nächstgelegenen Wälzlager, mit einem zweiten Wälzlager, und mit einem einstückig ausgebildeten, hohlzylinderartigen Außenteil, das Außenteil als Außenlaufbahn für Wälzkörper des zweiten Wälzlagers ausgebildet und in das Außenteil ein separater Außenring als Außenlaufbahn für Wälzkörper des ersten Wälzlagers einsetzbar.

## Beschreibung

Die Erfindung betrifft die Lagerung einer Welle eines Kegelrades.

Beispielsweise aus der DE 30 04 316 A1 ist eine Lagerung einer Welle eines Maschinenelements, insbesondere einer Ritzelwelle eines Getriebes in einem eine Bohrung zum Durchtritt der Welle aufweisenden Gehäuse mittels eines zweireihigen vorgespannten Wälzlagers, dessen Außenring mit einem radial nach außen gerichteten Flansch versehen ist, bekannt.

Eine Aufgabe der Erfindung ist es, eine verbesserte Lagerung einer Welle eines Kegelrades so zu schaffen, dass für unterschiedliche Einsatzfälle eine Vielzahl von Bauteilen der Lagerung unverändert einsetzbar ist.

Die Aufgabe wird durch den Gegenstand des Anspruchs 1 gelöst. Vorteilhafte Ausgestaltungen sind in den Unteransprüchen beschrieben.

Gemäß Anspruch 1 ist bei einer Lagerung einer Welle eines Kegelrades mit wenigstens einem ersten, dem Kegelrad nächstgelegenen Wälzlager, mit einem zweiten Wälzlager, und mit einem einstückig ausgebildeten, hohlzylinderartigen Außenteil, das Außenteil als Außenlaufbahn für Wälzkörper des zweiten Wälzlagers ausgebildet und in das Außenteil ein separater Außenring als Außenlaufbahn für Wälzkörper des ersten Wälzlagers einsetzbar.

Die Erfindung beruht dabei auf der Erkenntnis, dass bei der Lagerung einer Welle eines Kegelrades insbesondere das kegelradseitige Wälzlager angepasst an den jeweiligen Einsatzfall unterschiedlich auszulegen und zu dimensionieren ist. Dadurch, dass dieses Wälzlager gemäß dem Anspruch 1 mit einem separaten Außenring ausgebildet ist, erfolgt die an den jeweiligen Einsatz angepasste Auslegung durch entsprechende Dimensionierung des ersten Wälzlagers, wobei lediglich ein Außendurchmesser dessen Außenrings unabhängig vom Einsatzfall gleich bleibt. Bei unterschiedlichen Anwendungen kommen demnach für das erste Wälzlager verschiedene Lagertypen mit einem gleichen Lageraußenringdurchmesser zum Einsatz. Weiterhin bleiben aber insbesondere das Außenteil und auch weitere Bauteile der Lagerung für unterschiedliche Einsatzfälle unterverändert, was durch damit erzielbare hohe Stückzahlen mit Vorteil eine einfache und kostengünstige Herstellbarkeit mit sich bringt. Somit eignet sich das Lagerungskonzept gemäß dem Anspruch 1 insbesondere zur wirtschaftlichen Herstellung von vergleichbaren, aber trotzdem unterschiedlichen Serien kleinerer Stückzahlen.

In einer vorteilhaften Ausgestaltung sind die beiden Innenringe der beiden Wälzlager zum stirnseitigen Aneinanderliegen ausgebildet. Dadurch entfällt mit Vorteil die Notwendigkeit einer dazwischen anzuordnenden Hülse, wobei durch eine entsprechende Zupaarung der beiden Innenringe zueinander eine vorgebbare Vorspannung für die Wälzlager bei deren Montage mit sichergestellt wird.

In einer vorteilhaften Ausgestaltung umfasst die Welle zwischen dem Kegelrad und dem ersten Wälzlager eine flanschartige, sich radial nach außen hin erstreckende Auskragung, die beispielsweise zusammen mit der Welle einstückig ausgebildet ist. Gegenüber Lösungen, bei denen das Kegelritzel und die Welle einstückig ausgebildet sind, ist es dadurch mit Vorteil möglich, dass beispielsweise ein Getriebehersteller unterschiedliche Kegelritzel montieren kann, wobei es aber gleichzeitig mit Vorteil für den Wälzlagerhersteller möglich ist, die Welle mit den darauf befestigten Wälzlagern derart zu liefern, dass die Wälzlager bereits mit richtiger Anstellung und damit mit einer genauen Einstellung der Vorspannkraft montiert sind. Dabei ist der Wälzlagerhersteller mit der Anstellung der Lager in der Regel besser vertraut als beispielsweise der die Lagerung verbauende Getriebehersteller, womit mit Vorteil Probleme beim Getriebehersteller vermieden werden. Bei der Montage des Kegelritzels ist es weiterhin zur richtigen Einstellung des Zahneingriffs dann möglich, wenigstens eine passende Einstellscheibe zwischen dem Kegelritzel und der flanschartigen Auskragung anzuordnen.

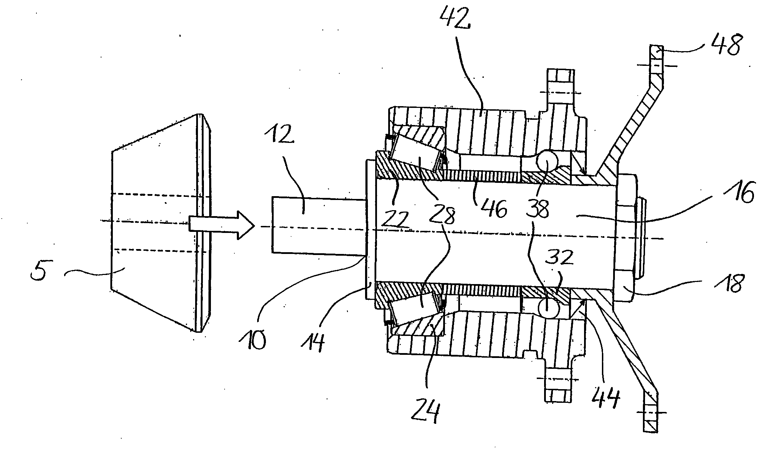

Weitere Vorteile, Merkmale und Einzelheiten der Erfindung ergeben sich aus dem im folgenden beschriebenen Ausführungsbeispiel der Erfindung anhand der Figur.

Die Figur zeigt als ein Ausführungsbeispiel der Erfindung einen Längsschnitt durch eine Lagerung einer Welle 10 eines Kegelritzels 5, wobei das Kegelritzel 5, die Welle 10 und eine Wellenmutter 18 ungeschnitten dargestellt sind. Die einstückig ausgebildete Welle 10 umfasst dabei im linken Bereich einen zylinderartigen Abschnitt 12, auf dem das Kegelritzel 5 befestigbar ist.

An vorgenanntem zylinderartigen Abschnitt 12 zum Aufnehmen des Kegelritzels 5 schließt sich ein radial nach außen hin auskragender, scheibenartiger Abschnitt 14 der Welle an. Dabei kann bei der Montage des Kegelritzels 5 auf dem zylinderartigen Abschnitt 12, zwischen dem Kegelritzel 5 und dem scheibenartigen Abschnitt 14 der Welle 10, zum Einstellen eines richtigen Zahneingriffs zusätzlich eine nicht dargestellte Einstellscheibe angeordnet werden.

Auf der rechten Seite dient der scheibenartige Abschnitt 14 als Anschlagfläche für einen Innenring 22 eines ersten, als Kegelrollenlager ausgebildeten Wälzlagers. Dabei ist ein Außenring 24 des ersten Wälzlagers in einer entsprechenden Ausnehmung eines Außenteils 42 angeordnet. Zwischen dem Innenring 22 und dem Außenring 24 sind die kegelstumpfartigen Wälzkörper 28 des ersten Wälzlagers angeordnet.

Das Außenteil 42 umfasst eine flanschartige Auskragung mit Bohrungen, durch die hindurch das Außenteil 42 an einem Getriebegehäuse angeschraubt werden kann. Weiterhin bildet das Außenteil 42 die Außenlaufbahn für Wälzkörper 38 eines zweiten, beispielsweise als Schrägkugellager ausgebildeten Wälzlagers. Ähnlich wie das erste Wälzlager umfasst auch das zweite Wälzlager einen Innenring 32, wobei die Innenringe 22 und 32 der beiden Wälzlager auf einem weiteren zylinderartigen Abschnitt 16 der Welle 10 angeordnet sind.

Zwischen den einander zugewandten Stirnflächen der Innenringe 22 und 32 ist dabei eine Hülse 46 angeordnet. Weiterhin ist auf letztgenanntem zylinderartigen Abschnitt 16 der Welle 10 ein weiteres Flanschteil 48 angeordnet, wobei das Flanschteil 48, die beiden Innenringe 22 und 32 und die Hülse 46 durch die auf die Welle 10 aufgeschraubte Wellenmutter 18 auf der Welle 10 befestigt sind und über ein Anzugsmoment der Wellenmutter 18 die Vorspannung der Wälzlager einstellbar ist.

Um insbesondere einen sich auf der Kegelritzelseite erstreckenden Raum, in dem ein Schmiermittel, insbesondere ein Öl oder Fett vorhanden ist, und damit auch die Wälzlager nach außen hin abzudichten, ist zwischen dem Außenteil 42 und dem Flanschteil 48 ein Dichtring 44 angeordnet. Dazu ist das Außenteil 42 mit einer entsprechenden Sitzfläche für den Dichtring 44 ausgebildet. Der Dichtring 44 ist beispielsweise als ein Radialwellendichtring ausgebildet, am bestimmungsgemäß nicht zum Drehen vorgesehnen Außenteil 42 befestigt und liegt mit seiner Dichtlippe dichtend am Flanschteil 48 an. In anderen Ausführungsformen, bei denen beispielsweise das Flanschteil 48 nicht vorhanden ist und/oder der Innenring 32 anders ausgebildet ist, kann der Dichtring auch an der Welle oder dem Innenring dichtend anliegen.

In anderen Ausführungsformen kann die Hülse 46 auch entfallen, so dass entsprechend ausgebildete Innenringe stirnseitig direkt aneinander anliegen. Dabei ist durch ein entsprechendes Zupaaren der beiden Innenringe zueinander eine vorgebbare Vorspannung für die Wälzlager bei deren Montage mit Vorteil mit sichergestellt.

In weiteren Ausführungsformen ist der scheibenartige Abschnitt 14 und/oder das weitere Flanschteil 48 weggelassen und/oder das Kegelritzel ist einstückig mit der Welle ausgebildet. Ferner können natürlich insbesondere die Innenringe auch auf andere Art und Weise auf der Welle befestigt werden als durch die Wellenmutter 18.

### Bezugszeichenliste

- 5: Kegelritzel

- 10: Welle
- 12, 16: zylinderartiger Abschnitt der Welle
- 14: scheibenartiger Abschnitt der Welle
- 18: Wellenmutter

- 22: Innenring des ersten Wälzlagers
- 24: Außenring des ersten Wälzlagers
- 28: Wälzkörper des ersten Wälzlagers

- 32: Innenring des zweiten Wälzlagers
- 38: Wälzkörper des zweiten Wälzlagers

- 42: Außenteil
- 44: Dichtring
- 46: Hülse
- 48: Flanschteil

## Patentansprüche

1. Lagerung einer Welle eines Kegelrades mit wenigstens einem ersten, dem Kegelrad nächstgelegenen Wälzlager, mit einem zweiten Wälzlager, und mit einem einstückig ausgebildeten, hohlzylinderartigen Außenteil, wobei das Außenteil als Außenlaufbahn für Wälzkörper des zweiten Wälzlagers ausgebildet ist und in das Außenteil ein separater Außenring als Außenlaufbahn für Wälzkörper des ersten Wälzlagers einsetzbar ist.

2. Lagerung nach Anspruch 1, wobei die Welle zwischen dem Kegelrad und dem ersten Wälzlager eine radial sich nach außen hin erstreckende Auskragung umfasst.

3. Lagerung nach Anspruch 2, wobei die Welle zusammen mit der Auskragung einstückig ausgebildet ist.

4. Lagerung nach einem der Ansprüche 2 oder 3, wobei die Auskragung flanschartig ausgebildet ist.

5. Lagerung nach einem der Ansprüche 1 bis 4, wobei die Welle zusammen mit dem Kegelrad einstückig ausgebildet ist.

6. Lagerung nach einem der Ansprüche 1 bis 5, wobei das Kegelrad ein Ritzel ist.

7. Lagerung nach einem der Ansprüche 1 bis 6, wobei für ein Verschrauben mit einem weiteren Bauteil das Außenteil einen Flansch umfasst.

8. Lagerung nach einem der Ansprüche 1 bis 7, wobei das zweite Wälzlager als ein Schrägkugellager ausgebildet ist.

9. Lagerung nach einem der Ansprüche 1 bis 8, wobei das erste Wälzlager als ein Kegelrollenlager ausgebildet ist.

10. Lagerung nach einem der Ansprüche 1 bis 9, wobei das Außenteil wenigstens eine von einem Punkt seines Außenmantels zu einem Punkt seines Innenmantels verlaufende Öffnung für ein Schmieren wenigstens eines der Wälzlager aufweist.

11. Lagerung nach einem der Ansprüche 1 bis 10, wobei wenigstens eines der Wälzlager einen separaten Innenring als Innenlaufbahn für die Wälzkörper umfasst.

12. Lagerung nach Anspruch 11, wobei zwischen den Innenringen der beiden Wälzlager eine Hülse angeordnet ist.

13. Lagerung nach Anspruch 11, wobei die Innenringe der beiden Wälzlager für ein stirnseitiges Aneinanderanliegen ausgebildet sind.

14. Lagerung nach einem der Ansprüche 1 bis 13, wobei das zweite Wälzlager an seiner dem Kegelrad abgewandten Seite mittels einer Dichtung abgedichtet ist.

15. Lagerung nach Anspruch 14, wobei die Dichtung zwischen dem Außenteil und dem Innenring des zweiten Wälzlagers, der Welle oder einem weiteren zwischen der Dichtung und der Welle angeordnetem Bauteil angeordnet ist.
